# EUROPEAN PATENT SPECIFICATION

(11) **EP 2 996 015 B1**
(45) Date of publication and mention of the grant of the patent: **07.11.2018**
(21) Application number: 15183657.4
(22) Date of filing: 03.09.2015
(51) Int. Cl.: G06F 3/00, G06K 9/00, G06K 9/32, G06T 19/00, G06F 21/31, G05B 15/02, G09G 5/00

(54) **METHOD TO USE AUGMENTED REALITY TO FUNCTION AS HMI DISPLAY**
VERFAHREN ZUR VERWENDUNG VON ERWEITERTER REALITÄT ALS HMI-ANZEIGE
PROCÉDÉ POUR UTILISER LA RÉALITÉ AUGMENTÉE EN TANT QU'AFFICHAGE HMI

(30) Priority: 09.09.2014 US 201414480862
(43) Date of publication of application: 16.03.2016
(73) Proprietor: Schneider Electric IT Corporation, West Kingston, RI 02892 (US)
(72) Inventor: Fallon, Raymond, Oranmore (IE); Bohan, Paul, Galway (IE); Barrett, Enda, Salthill (IE); Katru, Siva Prasad, 522503 Guntur (IN); Rathish, Veena, 695581 Trivandrum (IN); Deplar, Vishwas Mohaniraj, Acton, MA Massachusetts 01720 (US)
(74) Representative: Murgitroyd & Company

(56) References cited:
- WO-A1-2007/066166
- US-A1- 2013 031 202
- US-A1- 2013 069 985
- VALENTIN HEUN ET AL: "Smarter objects", 20130427; 20130427 - 20130502, 27 April 2013 (2013-04-27), pages 961-966, XP058015943, DOI: 10.1145/2468356.2468528 ISBN: 978-1-4503-1952-2
- Sabine Webel: "Multimodal Training of Maintenance and Assembly Skills Based on Augmented Reality", , 7 December 2011 (2011-12-07), XP055240441, Retrieved from the Internet: URL:http://tuprints.ulb.tu-darmstadt.de/28 58/1/SW_Diss_final.pdf [retrieved on 2016-01-12]
- SVENJA KAHN ET AL: "Beyond 3D As-Built Information Using Mobile AR Enhancing the Building Lifecycle Management", CYBERWORLDS (CW), 2012 INTERNATIONAL CONFERENCE ON, IEEE, 25 September 2012 (2012-09-25), pages 29-36, XP032265669, DOI: 10.1109/CW.2012.12 ISBN: 978-1-4673-2736-7

## Description

### BACKGROUND

### 1. Field of Invention

Aspects and embodiments of the present disclosure are directed to systems and methods for interacting with electronic equipment using an augmented reality human-machine interface.

### 2. Discussion of Related Art

A user interface, in the industrial design field of human-machine interaction, is the space where interaction between human operators and machines occur. Desirably, this interaction facilitates effective operation and control of the machine by the operator, and provides feedback from the machine to the operator, which aids the operator in making operational decisions. Examples of this broad concept of user interfaces include the interactive aspects of computer operating systems, hand tools, heavy machinery operator controls, and process controls. The design considerations applicable when creating user interfaces are related to or involve such disciplines as ergonomics and psychology.

A user interface is a system by which people (users) interact with a machine. A user interface may include hardware (physical) and software (logical) components. User interfaces exist for various systems, and provide a means of input, allowing the users to manipulate a system, and output, allowing the system to indicate the effects of the users' manipulation.

One goal of human-machine interaction engineering is to produce a user interface which makes it easy (self explanatory), efficient, and enjoyable (user friendly) to operate a machine in the way which produces a desired result. To achieve this goal, it may be desirable that a user need provide only minimal input to achieve a desired output, and also that the machine minimizes undesired outputs to the user.

With the increased use of personal computers and the relative decline in societal awareness of heavy machinery, the term "user interface" is generally assumed to mean a graphical user interface of an electronic device, while industrial control panel and machinery control design discussions more commonly refer to human-machine interfaces (HMI).

US2013/031202A discloses a method which includes obtaining information to determine a location of a data center device, communicating the information and an identity of a user of a portable device to an augmented reality manager, and receiving in the portable device overlay information responsive to the communication and a type of the user. This information can then be displayed over a view of the data center device on a display of the portable device.

A paper presented by Huen, Kasahara and Maes at the 2013 ACM SIGCHI Conference on Human Factors in Computing Systems entitled "Smarter Objects: using AR technology to program physical objects and their interactions" disclosed a system which associates a virtual object with every physical object to support an easy means of modifying the interface and the behavior of that physical object as well as its interactions with other "smarter objects". As a user points a smart phone or tablet at a physical object, an augmented reality application recognizes the object and offers an intuitive graphical interface to program the object's behavior and interactions with other objects.

US2013/069985A discloses a wearable computing device which includes a head-mounted display (HMD) that provides a field of view in which at least a portion of the environment of the wearable computing device is viewable. The HMD is operable to display images superimposed over the field of view. When the wearable computing device determines that a target device is within its environment, the wearable computing device obtains target device information related to the target device. The target device information may include information that defines a virtual control interface for controlling the target device and an identification of a defined area of the target device on which the virtual control image is to be provided. The wearable computing device controls the HMD to display the virtual control image as an image superimposed over the defined area of the target device in the field of view.

WO2007/066166A discloses a method to process and display control instructions and technical information for equipment, plant or a process in an industrial facility. A software entity may be configured with identities of selected equipment, plant or processes. The software entity may also retrieve information associated with said equipment, plant or process by means of being so configured. Information may be combined and annotated on a display device to provide control or maintenance instructions. A display device, a computer program and a control system are also described.

### SUMMARY

In accordance with an aspect of the present disclosure, there is provided a portable computing device comprising a body; a camera disposed on the body; a display screen disposed on the body; and a processor within the body, the processor configured to identify an electronic device included in a plurality of electronic devices from an image of a map including markers associated with each of the plurality of electronic devices, wherein the image is captured by the camera, wherein the markers are positioned in locations on the map corresponding to physical locations of each of the plurality of electronic devices in a facility, each of the markers encoding identification information of a corresponding specific electronic device, each marker, when scanned by the camera of portable computing device, causing a virtual HMI of the corresponding specific electronic device to be displayed in the display screen of the portable computing device, and wherein the map is displayed over a projector or a computer display or printed out on a sheet of paper; configure and display a virtual human-machine interface (HMI) associated with the electronic device on the display screen responsive to identifying the electronic device, wherein the virtual HMI has a substantially similar direct control interface to a physical HMI associated with the electronic device and configured with a level of functionality of the virtual HMI selected based on an identification of a security access level of a user of the portable computing device; receive user commands through the virtual HMI; and cause the user commands to be communicated to the electronic device.

In some embodiments, the virtual HMI provides real-time status information for the electronic device as well as real time configuration changes that are either brought about by the user through accessing the interface on the portable computing device or through some other means.

In some embodiments, the virtual HMI is customizable by a user of the portable computing device.

In some embodiments, the processor is further configured to superimpose a visual indication of the electronic device on an image of the electronic device in the display
screen. The visual indication of the electronic device may provide a real-time indication of a status of the electronic device.

In some embodiments, the virtual HMI is displayed in a fixed location on the display screen, the virtual HMI remaining in the fixed location upon reorientation of the portable computing device.

In some embodiments, the processor is further configured to superimpose an animation of a portion of an operation to be performed on the electronic device on an image of the electronic device in the display screen. The processor may be further configured to modify the animation responsive to receipt of real-time status information from the electronic device. The processor may further be configured to alter the animation in receipt of a user interaction that indicates the acceptance by the user of the sequence or instruction provided. The processor may be configured to modify the animation responsive to the receipt of an indication from the user that they are ready to move onto a next step of a maintenance procedure for the electronic device.

In some embodiments, the processor is further configured to superimpose an image of an internal component of the electronic device on an image of the electronic device in the display screen.

In some embodiments, there is provided a system comprising a plurality of electronic devices; a portable computing device according to claim 1; and a projector or a sheet of paper or a device having a computer display; the system configured to display a map including markers associated with each of the plurality of electronic devices, the markers positioned in locations on the map corresponding to physical locations of each of the plurality of electronic devices in a facility; each of the markers encoding identification information of a corresponding specific electronic device, each marker, when scanned by the camera of portable computing device, causing a virtual HMI of the corresponding specific electronic device to be displayed in the display screen of the portable computing device, the map displayed over the projector or the computer display or printed out on the sheet of paper.

Optionally, for brevity the user can customize the extent of the functionality available, given situational constraints. A different user display may be provided depending on the location of the individual within the facility or the current operation they are attempting to execute.

In some embodiments, the virtual HMI of the corresponding specific electronic device displays real-time status information of the specific electronic device.

In accordance with another aspect, there is provided a method for accessing an electronic device included in a plurality of electronic devices, the method comprising displaying a map including markers associated with each of a plurality of electronic devices, the markers positioned in locations on the map corresponding to physical locations of each of the plurality of electronic devices in a facility, each of the markers encoding identification information of a corresponding specific electronic device, each marker, when scanned by the camera of portable computing device, causing a virtual HMI of the corresponding specific electronic device to be displayed in the display screen of the portable computing device, the map displayed over a projector or a computer display or printed out on a sheet of paper; scanning a marker included in the map and associated with one of the plurality of electronic devices with a camera of a portable computing device; determining unique identification information of the electronic device from the marker; acquiring identification information of a user of the portable electronic device; determining a security access level of the user with regard to the electronic device responsive to accessing a database associating a security access level of the user with the identification information of the user and the unique identification information of the electronic device; configuring and displaying a virtual HMI on a display screen of the portable computing device, wherein the virtual HMI has a substantially similar direct control interface to a physical HMI associated with the electronic device and configured with a level of functionality of the virtual HMI selected based on an identification of a security access level of a user of the portable computing device; and displaying real-time status information of the electronic device on the display screen of the portable computing device responsive to a determination that the user has a security access level allowing for display of the real-time status information of the electronic device.

The physical implementation of the virtual HMI on the portable computing device may be designed to look like the physical embodiment of the HMI to ease the transition from one interface to the other. The virtual HMI may also be enhanced to respond to other interactions and gestures to enhance the user experience due to the greater power and features that the portable computing device may have.

In some embodiments, the method further comprises, responsive to a determination that the user has a sufficiently high security access level for the electronic device, receiving user commands and configuration information through the virtual HMI, and causing the user commands and configuration information to be communicated to the electronic device.

In some embodiments, the method further comprises, responsive to a determination that the user is unauthorized to access the electronic device, displaying an indication that the user is unauthorized to access the electronic device in the virtual HMI.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1 is an illustration of an embodiment of a Human-Machine Interface (HMI);
FIG. 2 is an illustration of an embodiment of a virtual HMI;
FIG. 3 is an illustration of another embodiment of a virtual HMI;
FIG. 4 is an illustration of an embodiment of a virtual HMI presented on a screen of a smartphone for information on an electronic device that is identified by a marker;
FIG. 5 is an illustration of an embodiment of a virtual HMI presented on a screen of a smartphone along with an augmented image of an electronic device with which a user may interact through the HMI;
FIG. 6A is an image in a sequence of AR images illustrating performing a maintenance operation on an electronic device;
FIG. 6B is another image in a sequence of AR images illustrating performing the maintenance operation on an electronic device;
FIG. 6C is another image in a sequence of AR images illustrating performing the maintenance operation on an electronic device;
FIG. 6D is another image in a sequence of AR images illustrating performing the maintenance operation on an electronic device;
FIG. 7A is another image in a sequence of AR images illustrating performing the maintenance operation on an electronic device;
FIG. 7B is another image in a sequence of AR images illustrating performing the maintenance operation on an electronic device;
FIG. 7C is another image in a sequence of AR images illustrating performing the maintenance operation on an electronic device;
FIG. 7D is another image in a sequence of AR images illustrating performing the maintenance operation on an electronic device;
FIG. 8 is an AR image of an electronic device illustrating internal components of the device;
FIG. 9 is an embodiment of a display of a portable electronic device illustrating images of a plurality of electronic devices and AR status widgets of the electronic devices physically matching where the actual electronic device reside;
FIG. 10 is an embodiment of a secure device map (SDM) system;
FIG. 11 is a flow chart of a method of using an embodiment of an SDM system;
FIG. 12 illustrates widgets displayed on portable electronic devices of users having different access levels to an electronic device in an embodiment of a SDM system;
FIG. 13 is a block diagram of a computer system included in embodiments of systems disclosed herein; and
FIG. 14 is a block diagram of a memory system of the computer system of FIG. 13.

### DETAILED DESCRIPTION

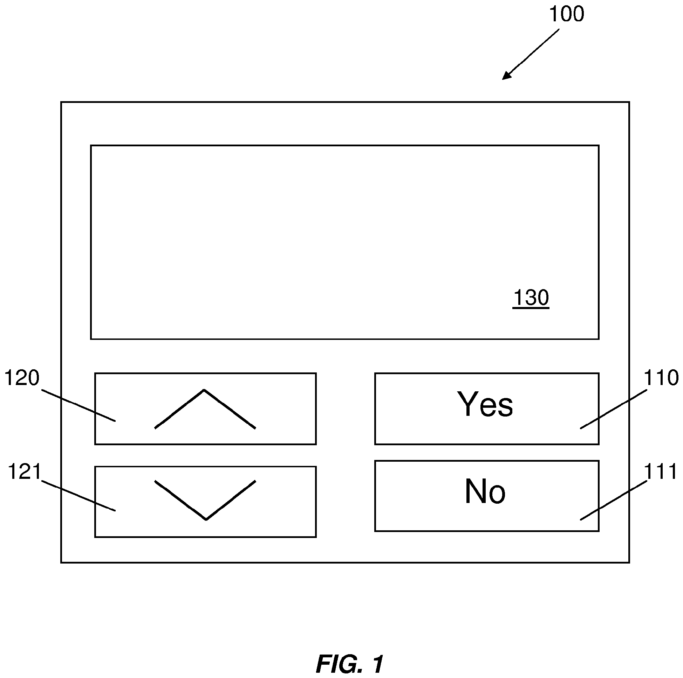

HMIs are used in a variety of applications. FIG. 1 shows one embodiment of a HMI 100. The HMI may include a low resolution display 130, for example, a LCD display, and a collection of buttons 110, 111, 120, 121 to allow a user to interact with the interface. For cost and spatial reasons, it is often desirable to make the interface compact and with few separate parts, so a manufacturer may configure buttons on the interface as "soft keys" to perform multiple different functions. For example, the HMI 100 may include scroll buttons 120, 121 for scrolling through command menus as well as "Yes" and "No" buttons 110, 111 to accept and reject options, respectively as well as other buttons that perform other functions. The display 130 may show limited information to allow the user to be able to perform the functions they need to without unnecessary distraction.

Augmented reality (AR) is a live, direct or indirect, view of a physical, real-world environment whose elements are augmented (or supplemented) by computer-generated sensory input such as sound, video, graphics, text, symbols, or location, for example, global positioning system (GPS), data. AR is related to a more general concept called mediated reality, in which a view of reality is modified (possibly even diminished rather than augmented) by a computer. As a result, the technology functions by enhancing one's current perception of reality. By contrast, virtual reality replaces a user's perception of the real world with a simulated one. Augmentation is conventionally in real-time and in semantic context with environmental elements, such as sports scores displayed on a television screen during a match. With the help of advanced AR technology (for example, adding computer vision and object recognition) the information about the surrounding real world of the user becomes interactive and digitally manipulable.

A smartphone is a mobile phone built on a mobile operating system, with more advanced computing capability and connectivity than a feature phone. Modern smartphones may have sufficient computing power and offer advanced features that allow applications like sophisticated AR applications to be run.

A fiducial marker is an object placed in the field of view of an imaging system, for example, a camera of a smartphone which appears on an object to identify it.

Near field communication (NFC) is a set of standards for smartphones and similar devices to establish radio communication with each other by touching them together or bringing them into close proximity, usually no more than a few centimeters apart.

Various aspects and embodiments disclosed herein include systems and methods for interacting with electronic devices utilizing augmented reality technology. The electronic devices may include, for example, uninterruptible power supplies (UPS), building system controllers, for example, HVAC system controllers, or any other device which might otherwise be accessed through an HMI. The terms "electronic equipment," "electronic device," or simply "device" are used interchangeably herein. Although described with reference to electronic devices, embodiments disclosed herein may also or alternatively be used with industrial equipment, for example, vehicles or factory equipment with which a user may interact through a HMI. The terms "virtual HMI," "HMI display widget," and "widget" are used interchangeably herein.

Aspects and embodiments disclosed herein address various problems associated with prior art electronic system HMIs. Some aspects and embodiments may present a user with a virtual HMI through which the user may interact with an electronic system. This may reduce or eliminate the need to include a physical HMI on the electronic system, which may reduce the cost of the electronic system, especially when the electronic system HMI includes extended functionality. In many prior art systems, a HMI on a piece of electronic equipment may be accessed by anyone, authorized or unauthorized, which may be a security concern. Aspects and embodiments herein may provide a virtual HMI with functionality that is based on a user's access level to associated equipment. Aspects and embodiments disclosed herein may provide tiered access privileges without the need for a user to remember and enter a password into a HMI of an electronic system. Aspects and embodiments disclosed herein may provide for easier access to a HMI of an electronic system. For example, a virtual HMI on a portable electronic device such as a smartphone may be easier to access and interact with than a physical HMI which might be located in an awkward location on associated equipment. Aspects and embodiments disclosed herein may also involve a level of situational awareness, restricting a user's operations based on their activities or their location within the facility.

Aspects and embodiments disclosed herein may allow a user to customize a virtual HMI for an electronic device. This may allow the user to change the size or location of controls which might be inconveniently small or difficult to access on a physical HMI of the electronic device. A user may also customize a virtual HMI of an electronic device to include only the functionality that the user desires, making the HMI less cluttered and easier to use. Aspects and embodiments disclosed herein may facilitate richer interaction with a HMI of an electronic device. When a virtual HMI is provided on a portable electronic device, for example a smartphone, sensors such as touch (gesture), attitude, and/or voice sensors may be utilized instead of simple buttons that are pressed. Furthermore, a high resolution display of a smartphone may provide a user with an easier to read or richer information display than may be provided on the LCD screen of a physical HMI. Additionally, the location of a physical HMI display may be placed in an inconvenient location and a virtual HMI display may makes interaction with an associated electronic device easier for the user. The virtual HMI may provide a real time interface for an associated electronic device. Parameters associated with the device may be superimposed or overlayed on an image of the device on the display of a smartphone, providing real time feedback on the effect of user interactions through the virtual HMI.

Aspects and embodiments disclosed herein are described as being implemented on a smartphone, however, it should be recognized that these aspects and embodiments may also or alternatively be implemented on other forms of portable electronic devices, for example, tablets, laptop computers, head mounted displays such as Google Glass™, or any other form of portable electronic device known in the art. The terms "portable electronic device" and "portable computing device" are used interchangeably herein. In various embodiments, a smartphone or other portable electronic device may include a touch screen or other input mechanism through which a user may interact with a HMI displayed on the smartphone or other portable electronic device.

In one embodiment, a smartphone application (a "smartphone app") may include software supporting a HMI for an electronic device or system with associated augmented reality features. The user may open the smartphone app and may optionally be required to authenticate using a password, fingerprint, or some other security feature if security is an important consideration. In one embodiment, once a user's credentials are entered in the smartphone app, they don't need to be entered again. In yet another embodiment, no credentials may be required at all. Additionally or alternatively, information from the smartphone, for example an IP address or user ID may automatically be sent to a security access system upon opening the app and the user may be granted access to functionality for interacting with an electronic device commensurate with a previously established security level.

Some aspects and embodiments utilize a camera of a smartphone to provide an augmented reality view of a piece of electronic equipment. The app may turn on the camera of the smartphone when opened. In one embodiment, a fiducial marker, for example, a Quick Response Code (QR code), is placed on a device having and HMI and the fiducial marker acts as an augmentation sensor. In the present disclosure, QR codes are describes as a type of marker that may serve as a fiducial marker on a device for an AR app and which may encode information for the device, for example, a unique ID or identifier of a device. It should be understood however, that in any of the aspects or embodiments disclosed herein, a marker described as a QR code may be additionally or alternatively implemented using, for example, a one dimensional bar code, any form of matrix code known in the art, a unique image, a reCAPTCHA, text, or any other optically ascertainable information containing code or symbol.

In another embodiment, electronic equipment equipped with a NFC transmitter announces itself allowing the smartphone to identify the equipment. In yet other embodiments, other technology could be used to identify the electronic device.

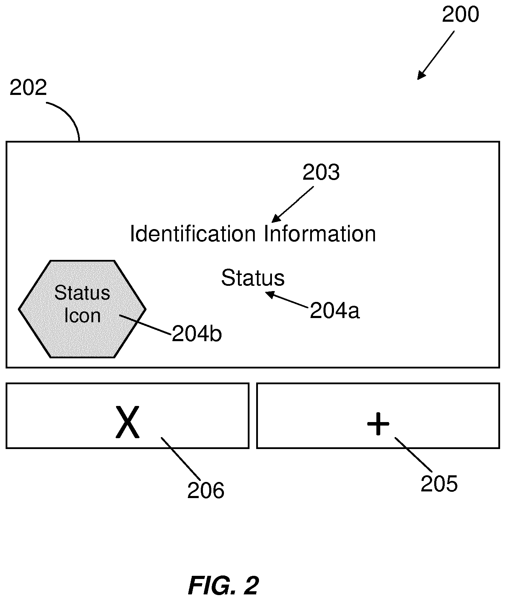

In one embodiment, when a user points a camera of a smartphone running an app as disclosed herein at a device that is identified using a unique marker, a display widget 200 (FIG. 2) is automatically displayed on the smartphone display screen. The display widget 200 may contain identification information 203, for example, the serial number of the device, along with real-time status information, which may be textual 204a and/or in the form of a status icon 204b augmented over a real time image of the device in the camera smartphone display screen.

The user can quickly identify the correct device, for example, by its identification information 203 and know its status from information provided in the display widget 200. In one embodiment, the widget may also employ graphical user interface (GUI) techniques such as color of a border 202 of an information window or of an icon 204b where, for example, green means that the device is functioning properly and red indicates that there is a problem.

In one embodiment, the user may dismiss the widget using a dismiss button 206 and can optionally identify another device to get information on that device. In another embodiment, the widget is automatically replaced when the smartphone identifies another device and displays a HMI of the other device, making the dismiss button 206 redundant. The user may configure the app to dismiss a presently displayed widget automatically upon identifying an alternate device, or to require the user to close the presently displayed widget using the dismiss button 206 before displaying a widget associated with another device. In one embodiment, the widget 200 may float with the electronic device that it is associated with and in yet another embodiment, it may be displayed on a fixed location on the display so that the user can interact with it more easily.

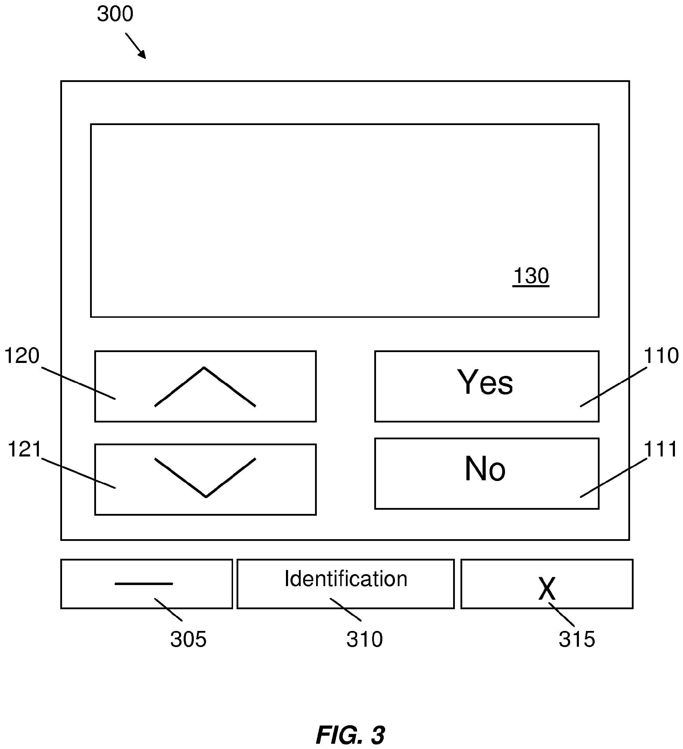

In some embodiments, the widget contains an element 205 that when touched allows one to display a richer HMI that allows for more monitoring as well as configuration and/or control of the device. An example of such an expanded HMI is illustrated in FIG. 3, indicated generally at 300. Widget 300 uses touch gestures recognized by a touch screen display of the portable electronic device much in the same way that traditional physical HMIs use push buttons and large displays. Additionally, touch gestures like swiping and pinching may be utilized where applicable to interact with a device through the HMI. For example, swiping upwards may result in the same action as pressing the up arrow widget 120.

In implementations where the widget 300 replaces a HMI or complements it, the widget may mimic the original display (FIG. 1) so a user does not have to learn a new interface. In some embodiments, the HMI display can be configured for ease of use or accessibility. For example, a user may configure the widget 300 to be displayed in high contrast mode for ease of viewing for the user.

In addition to the elements of a HMI used to monitor, configure and control a device, at least one embodiment of widget 300 also includes an element 310 or elements that identify the device associated with the displayed HMI. This identification may be, for example, the serial number of the device or the public name attributed to it. In some embodiments, the widget 300 also includes an element 305 that makes the larger HMI display widget 300 diminish to the smaller HMI display widget 200 of FIG. 2. In some embodiments, the widget 300 also includes an element 315 that closes the HMI display for the device. In yet another embodiment of the invention, scanning a fiducial marker with a smartphone would bring up the HMI widget displayed in FIG. 3 directly rather than the one displayed in FIG. 2.

In one embodiment, each device of interest in a facility is assigned a unique ID (for example, a serial number). A marker, for example, a QR code or NFC element that encodes or contains the unique ID is placed on or in the device. During a commissioning process, the unique ID of a device is stored in a database along with an address that can be used to access the device, for example, an IP address or hostname.

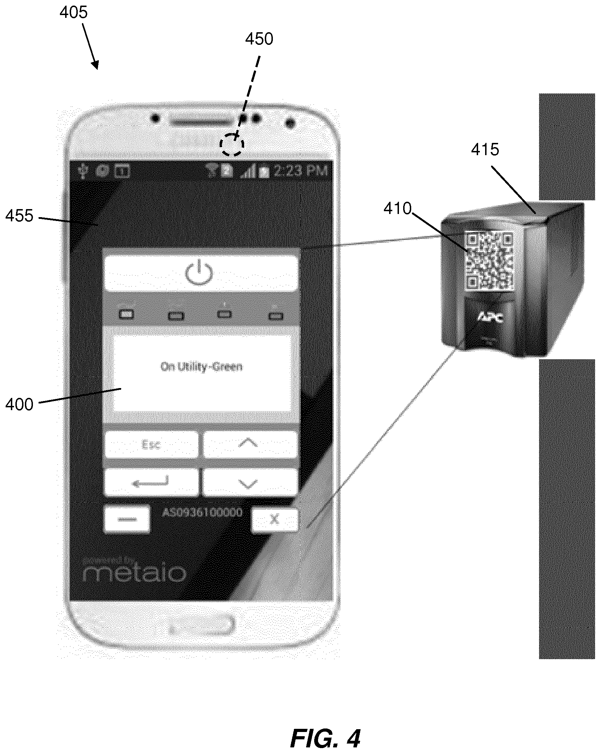

Subsequently, on scanning of the marker on or in the device with an appropriately configured smartphone, the unique ID of the device may be obtained. The smartphone may scan the marker and decode or extract the unique ID of the device from the marker. The smartphone may query an associated network and database or an internal database, use the unique ID to identify the device and its type, and establish a connection with the device, either directly or through the associated network. Based on the device type, the corresponding elements of the device HMI are prepared and presented on the user's smartphone superimposed over or replacing an image of the device. FIG. 4 shows an embodiment of an augmented HMI display widget 400 which is presented on the display screen 455 of a smartphone 405 after scanning a fiduciary marker 410, in this example, a QR code on a device 415, in this example a UPS, with a camera 450 of the smartphone 405. The camera 450 is illustrated in FIG. 4 in dotted lines because it is on the opposite side of the smartphone 405 from the display screen 455.

As the user interacts with the HMI display widget 400 on the smartphone 405, the actions of the user are communicated to the device 415. As the device 415 changes state, information regarding the state of the device 415 may be presented on the virtual HMI or superimposed on an image of the device 415 in the screen 455 of the smartphone 405. In one embodiment, the user can change the types of elements that are displayed in the virtual HMI or the appearance of the various elements of the virtual HMI.

In some embodiments, a virtual HMI display is positioned generally centrally in the screen of the smartphone and does not move around as the smartphone is pointed in different directions. Retaining the virtual HMI display at a fixed location on the screen may make it is easier to use than if the virtual HMI were to remain superimposed on an image of the device in the smartphone display screen as the smartphone was moved. If the augmented HMI were to move on the smartphone screen with a fiducial marker on the device 415, it could make it more challenging to use. In some embodiments, even if the fiducial marker moves out of the view of the smartphone camera, the virtual HMI display remains in a fixed location on the screen of the smartphone. This makes the virtual HMI easier to use than if it disappeared each time the fiducial marker moved out of view of the smartphone camera. In one embodiment, the HMI display is augmented with visual clues such as color coding and iconography that quickly relate information about the device 415 to the user without a need for the user to read text.

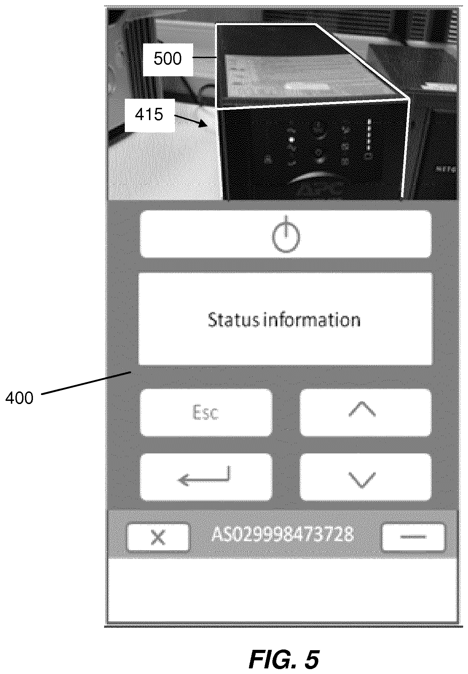

In some embodiments, the specific device a user is interacting with may be highlighted in the display screen of the smartphone. In some scenarios there may be a number of adjacent physical devices simultaneously viewed by the camera of the smartphone and displayed in the display screen of the smartphone. Highlighting a specific device which the user is presently interacting with may help remind the user which device is being accessed. For example, as illustrated in FIG. 5, an outline of an image of a device 415 may be highlighted with a wireframe border 500 surrounding the device. The image of the device 415 may be obtained from a camera of the smartphone and displayed on the screen of the smartphone in conjunction with the virtual HMI 400. The wireframe highlighting 500 may be obtained from a database of three-dimensional models of devices of interest against which the smartphone, or a computing device which the smartphone is in communication with, compares the image of the device. Additionally or alternatively, a configuration of the wireframe highlighting may be accessed by the smartphone, or a computing device which the smartphone is in communication with, searching a database for a device type matching that corresponding to the device identification number obtained from scanning the marker, for example, the QR code 410 of FIG. 4.

Once the user scans the marker, the user may move the camera away from the device location. If there are multiple devices, for example, in a data center rack including multiple servers and/or other devices, the user may not remember which device the user is interacting with. By highlighting the device in the screen of the smartphone the user can quickly and easily see which device is currently under the control of the virtual HMI displayed on the smartphone display screen.

In some embodiments, augmented reality may be utilized to assist a technician in carrying out defined procedures such as servicing or replacing parts of a device. For example, augmented reality techniques may be utilized to provide useful information to the technician in the form of visual instructions which assist the technician in carrying out servicing operations on the device. The technician may utilize a smartphone to view an image of a device captured by the camera of the smartphone. The smartphone may superimpose instructions or animations on the image of the device in the display screen of the smartphone to show the technician how to perform the desired service operation. The technician may follow along with the instructions or animations and carrying out a sequence of steps to service the device.

For example, a user may wish to replace a serviceable part of an electronic device such as the internal battery. The user may point the camera of a smartphone at the electronic device and an indication may be provided on an image of the electronic device on the smartphone display screen identifying, for example, by highlighting or outlining, a panel located on the device along with instructions indicating that that the panel must be removed. The instructions may be provided in the form of a visual cue, for example, an animation of the panel being removed superimposed on the image of the electronic device in the smartphone display screen. These visual instructions may be useful in a scenario where a user manual is not readily available or has been lost or where the user wants to use a system that is easier to use than reading a manual and more specific than a general video training that is popular today.

Once the panel is removed the user may be instructed, through the display of the smartphone, on how to carry out some maintenance using animation, such as replacing the battery. In some embodiments, the smartphone may be in communication with the electronic device which may provide real time indication of the completion of various acts as determined from sensors included in the electronic device. The animation or other visual cue provided in the display screen of the smartphone may be modified responsive to receipt of real time status information from the electronic device. For example, a panel of the electronic device may include interlocks which provide an indication of whether the panel is in place or removed. If the technician is instructed to remove the panel as part of a servicing operation, instructions regarding acts to be performed after removing the panel may be sent to the smartphone only upon an indication from the electronic device of the panel having been removed. Alternatively or additionally, subsequent steps in an operation may be automatically illustrated on the smartphone responsive to receipt of an indication from the electronic device of a previous step having been completed. Sensors in the electronic device may also provide communication to the smartphone of whether a battery or other component has been successfully removed or installed to guide the work of the technician.

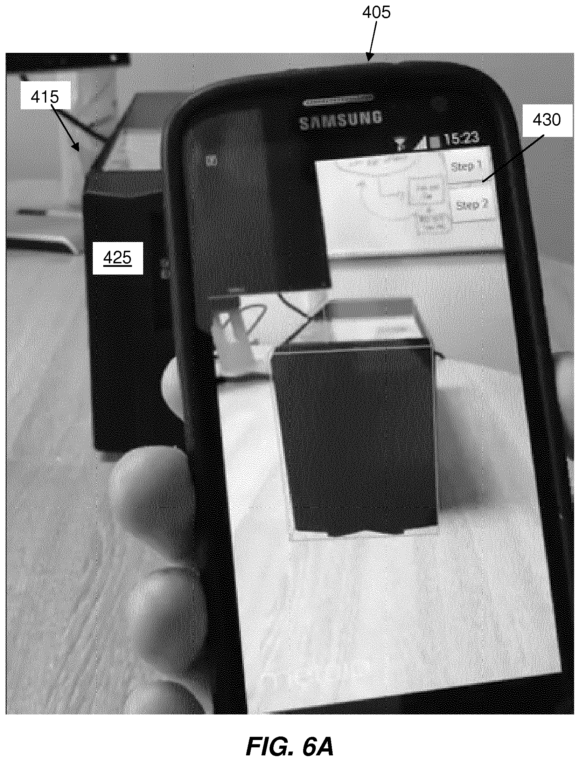

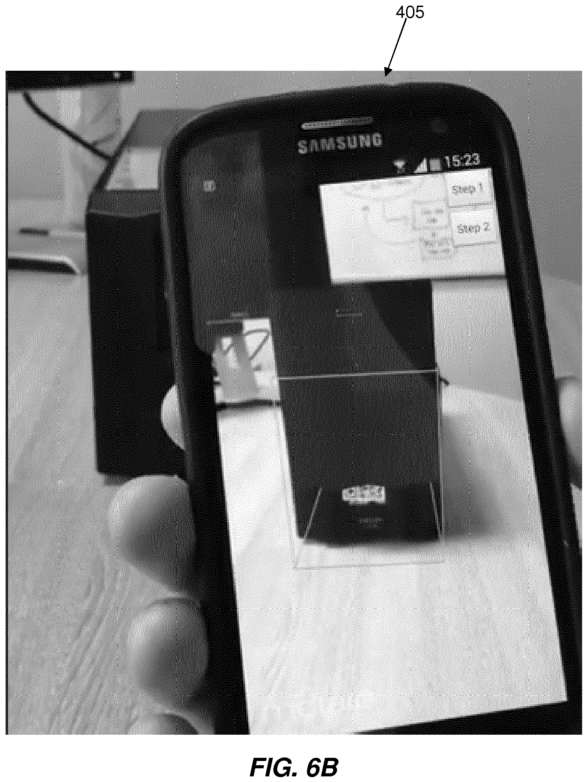

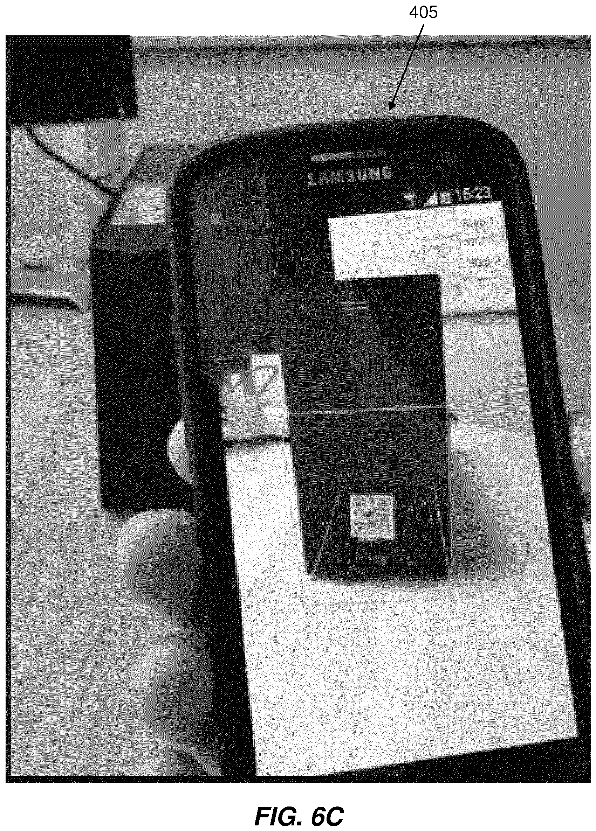

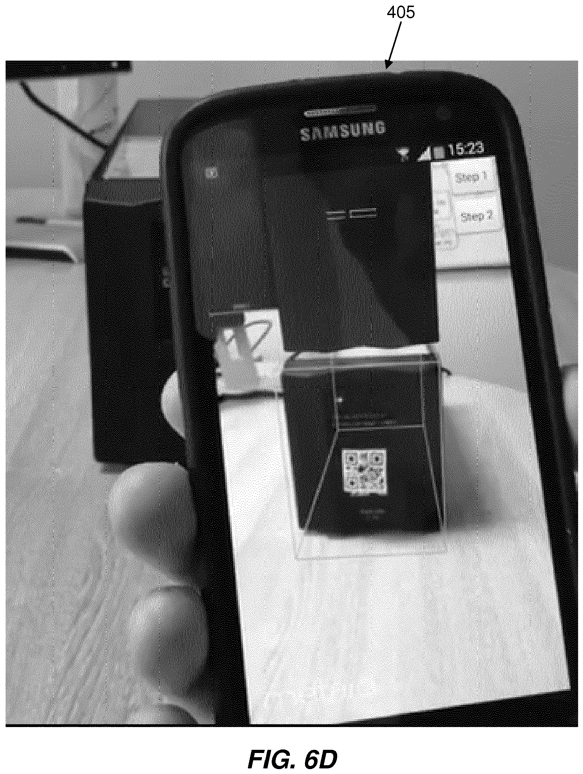

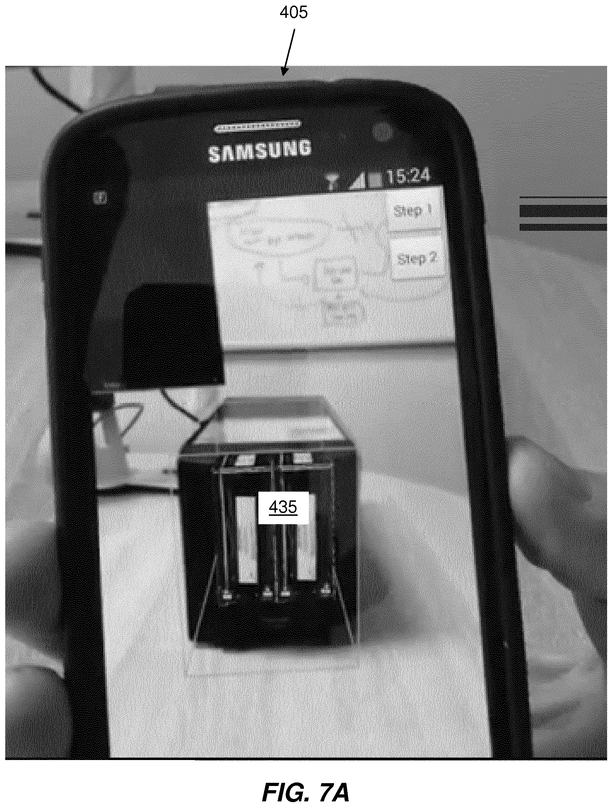

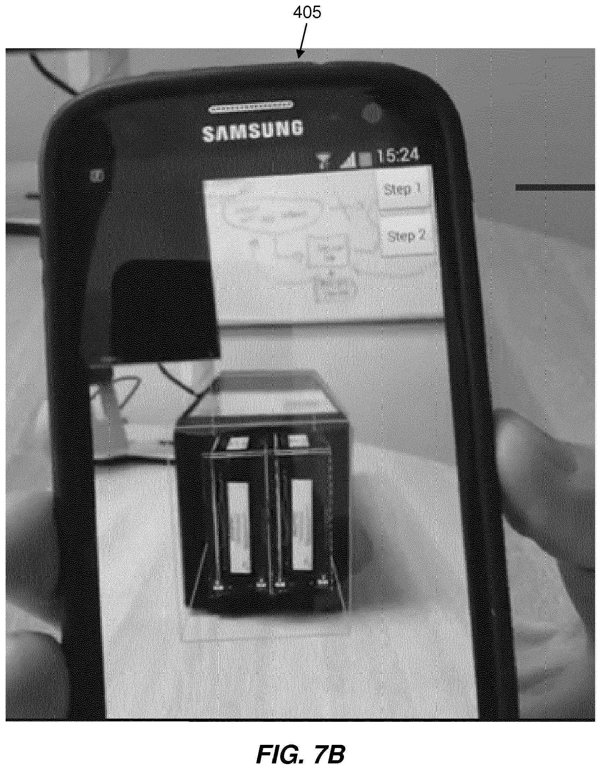

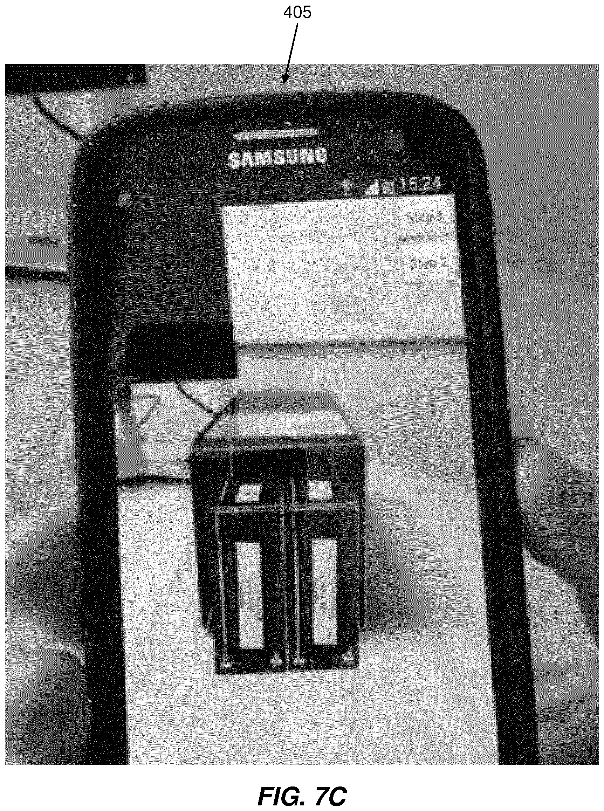

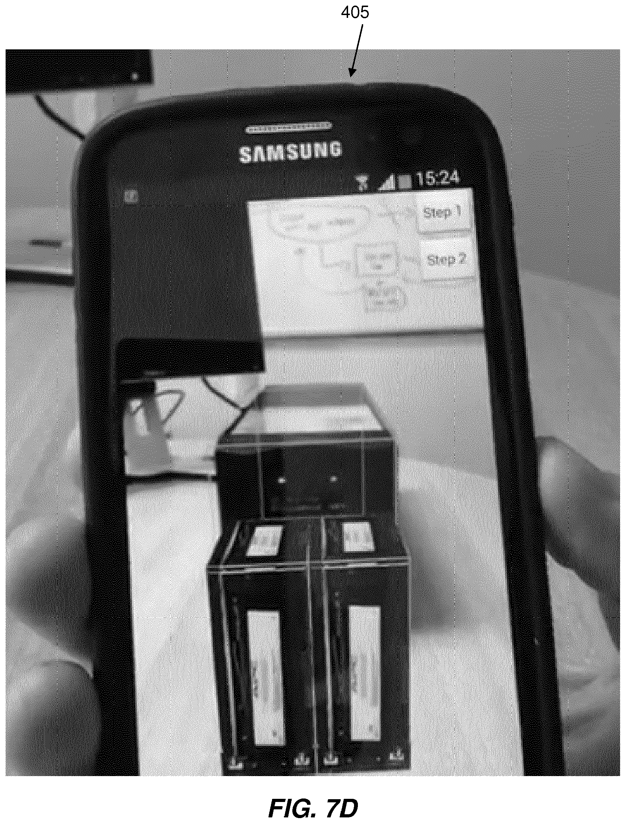

A user may point a camera of a smartphone at an electronic device 415 and the smartphone may recognize the electronic device either through reading a QR code on the electronic device or by comparing the image of the electronic device to images in a database of three dimensional models of potential devices of interest. Once the electronic device is identified, the user may request instructions on how to install or remove components of the electronic device through a menu in the display of the smartphone, or by other methods of entering a command in the smartphone, for example, by using a voice recognition feature of the smartphone to audibly request the instructions. The smartphone may respond by showing an animation of a first step, for example, removing the front panel 425 of the electronic device (FIGS. 6A - 6D). A second step of removing a component 435 of the electronic device may be shown in a second animation after completion of removal of the panel (FIGS. 7A - 7D). The animation of removing the component 435 may be shown responsive to the electronic device sending a signal to the smartphone or a network and external control computer of the panel 425 having been removed. Alternatively, the user may choose from a menu of steps 430 (FIG. 6A) or audibly request that instructions regarding a particular step be performed to communicate to the smartphone what animation to display so that either the user can know what's ahead or to accommodate the situation where the electronic device is unable to detect the requested change to the system, for example, removing a panel.

Different electronic device systems may often contain disparate internal components. Different models may have different components even though from the outside, they look the same and may belong to the same family of products. In one embodiment, a properly configured smartphone is able to communicate with the electronic device over the network to determine the exact make and model of the electronic device, allowing it to superimpose additional contextual information on an image of the electronic device in the display screen of the smartphone. One type of electronic device may look the same as another type of electronic device from the outside but may have different internal components. A smartphone running an AR app as disclosed herein may be capable of displaying different internal serviceable components, for example, different batteries for different electronic device models.

The above example was described with reference to an electronic device, however, it is to be understood that similar types of operations and methods may be performed in accordance with various embodiments with any of a number of different devices. The present disclosure is not limited to embodiments performed on or with any particular form of device.

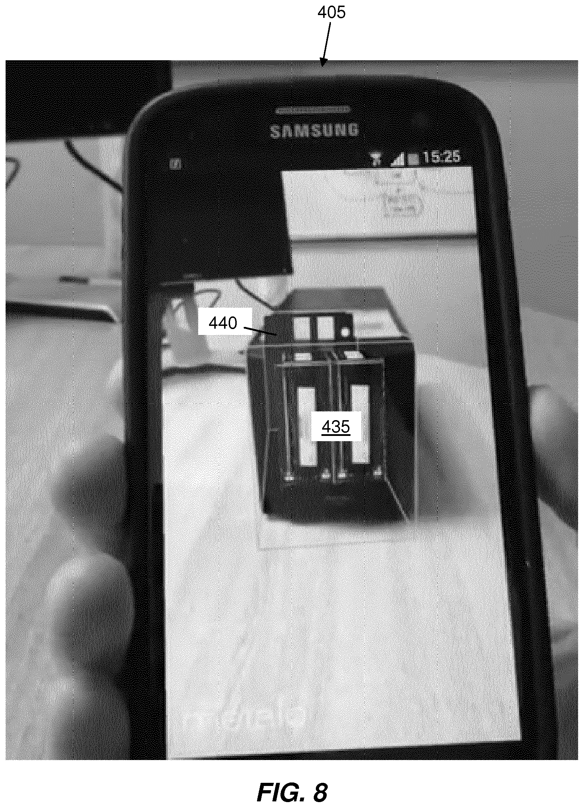

In some embodiments, HMI replication utilizes marker based tracking in the form of fiducial markers, for example, QR codes for indentifying and determining a type of device and to determine a particular virtual HMI which should be displayed and when the particular virtual HMI should be displayed. In other embodiments, in some servicing and maintenance operations a marker is not required and embodiments of the systems and methods disclosed herein may instead match an image of a device captured on a camera of a smartphone with a predefined CAD model of the device to identify the type of device. When the system identifies a particular device shape in a database of CAD models which matches the observed device, it overlays the relevant visual components on the image of the device on the screen of the smartphone. For example, as illustrated in FIG. 8, when the system identifies a particular electronic device, internal components such as the batteries 435 and a rear panel 440 may be shown superimposed on the real time image of the electronic device on the display screen of the smartphone. In addition, two dimensional images from a library of images can also be used to identify the device prior to superimposing the virtual HMI. Other devices may include additional or alternative internal components of interest, and the system may display different internal components over a real time image of a device depending on the device type or based on user preferences.

In some embodiments, to ensure that internal components specific to a correct particular device are displayed in the correct sequence, a network connection is established between the device and the smartphone. To achieve this, at some instance in the past the user may have scanned the QR code on the device and identified it correctly on the network through scanning for the specific IP address of the device. Once the device has been identified and communication has been established, contextual information specific to that device can be loaded into view by the augmented reality system. This approach combines both marker based and markerless technologies to ensure the correct information is displayed to the technician.

In one embodiment, real time status information regarding a device, for example, as electronic device may be provided to the smartphone, either through a direct wireless connection between the electronic device and the smartphone or through a network to which both the electronic device and the smartphone are in communication with. The smartphone may utilize the real time status information to overlay an image of component, for example, a battery over a real time image of the electronic device in an augmented fashion on the display screen of the smartphone. The image of the internal component, for example, the battery, may be augmented by being colored red or blinking if there is a problem with the battery compartment, for example, if the battery is not functioning properly. In yet another embodiment, the system color codes the electronic device outlets in an augmented fashion according to their current state, for example, green if an outlet is providing power, red if the outlet is powered down, and orange if the outlet is due to power down imminently. In yet another embodiment, the system displays a dotted line around the electronic device in an augmented fashion to indicate that the unit isn't properly grounded due to a site wiring fault. In other embodiments, the status of any device of interest may be communicated to a user by augmenting a real time image of the device with images or information regarding the device or internal components thereof in the display screen of a smartphone running an AR app as disclosed herein.

In another embodiment, a partial implementation of an existing HMI display including only some aspects as an original physical HMI display may be displayed on a smartphone responsive to scanning a device. Using an augmented reality display allows the system to supplement the original physical display. In various embodiments, the virtual HMI may replicate the whole original physical HMI display of a device, a part of the original physical HMI display of a device, or an entirely new implementation of a HMI display through the use of augmented reality technology.

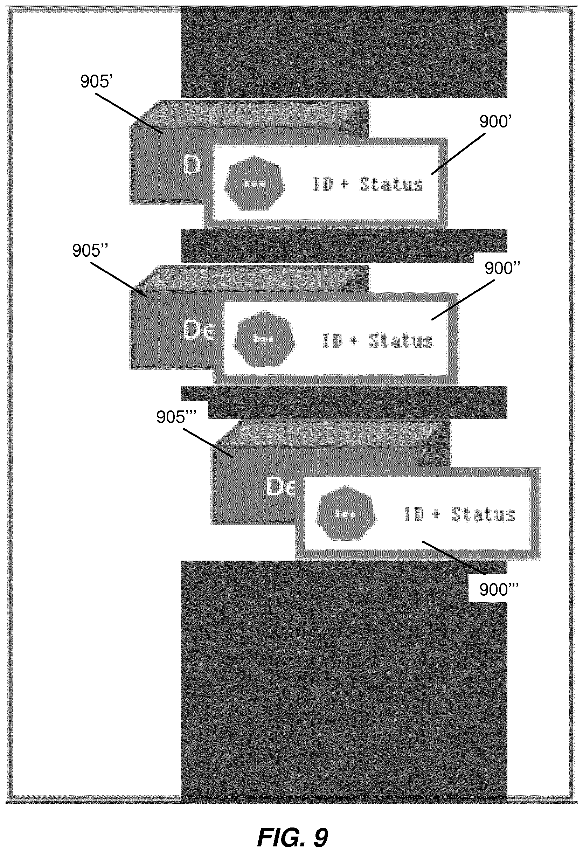

Another embodiment may include the ability to track the status of multiple devices in real time. In this scenario, as illustrated in FIG. 9 multiple widgets 900, 900', 900" containing simple status information may be anchored above each corresponding device 905', 905", 905"' in a display screen of a smartphone. Associations between the different widgets 900, 900', 900" and devices 905', 905", 905'" respectively may be established using inertial sensors (GPS, Wi-Fi location, RFID or other indoor positioning system), fiducial markers, or image matching techniques. To interact with a particular device, a user would touch or otherwise select one of the widgets which may load a more full featured virtual HMI display.

In additional embodiments, additional functionality regarding access security, personalized access control, and location tracking are incorporated into an augmented reality system for communicating with and controlling electronic devices. In some embodiments, the system includes a "Secure Device Map" (a SDM) which is configured to provide personalized access control to devices and to record and provide information regarding the location of a device.

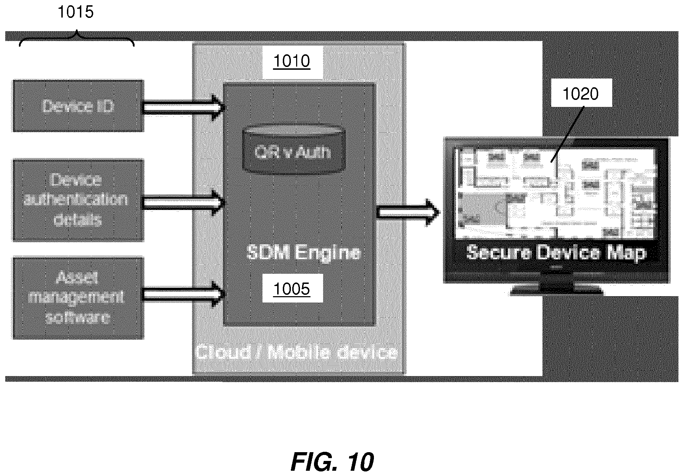

In a SDM, which may be implemented in a database (a SDM cloud) associated with the systems disclosed herein, each device of interest is represented using a unique ID, for example, a serial number. Using these unique IDs, a fiducial marker, for example, a QR code specific to each device is generated. Each QR code is also associated with the credentials and/or access levels of technicians, administrators, or other users in the SDM cloud. Location information of each device is obtained from asset tracking software, and/or from location information associated with each device when commissioning each device, for example, GPS coordinates or other location information associated with each device when installing, commissioning , or activating each device. Location information may also or alternatively be obtained for each device from triangulation of radio signals from each device or by other means known in the art. As illustrated in FIG. 10, a SDM engine 1005 associated with a SDM database in a server and/or in the cloud and/or on a mobile device may be provided with information regarding device IDs, devices locations, and user credentials 1015, and may generate a map of QR codes 1020 where the different QR codes representing the different devices are plotted on a map of a physical facility. Users may interact with the map, for example, by scanning the various QR codes to identify a particular device, obtain status information for a device, and/or communicate with a device through a virtual HMI as disclosed above. The QR code map may be updated periodically, for example, when a device is moved. The QR code map may be displayed over a projector or a computer display or printed out on a sheet of paper.

Once the SDM is generated, a user can point a SDM client device, for example, a smartphone running software enabling it to interact with the SDM, at a QR code for a device, either on the QR code map or on the device itself, and retrieve information for the devices for which the user is authorized. The SDM client device reads the QR code, extracts the device ID from the QR code, and queries the SDM engine for information regarding the device having the extracted device ID. The SDM engine may read information from the SDM client device, for example, login information or an IP address of the SDM client device to determine the identity of the user of the SDM client device. The SDM engine checks the identity of the user of the SDM client device and provides a response back to the SDM client device consistent with an access level of the user associated with the device ID.

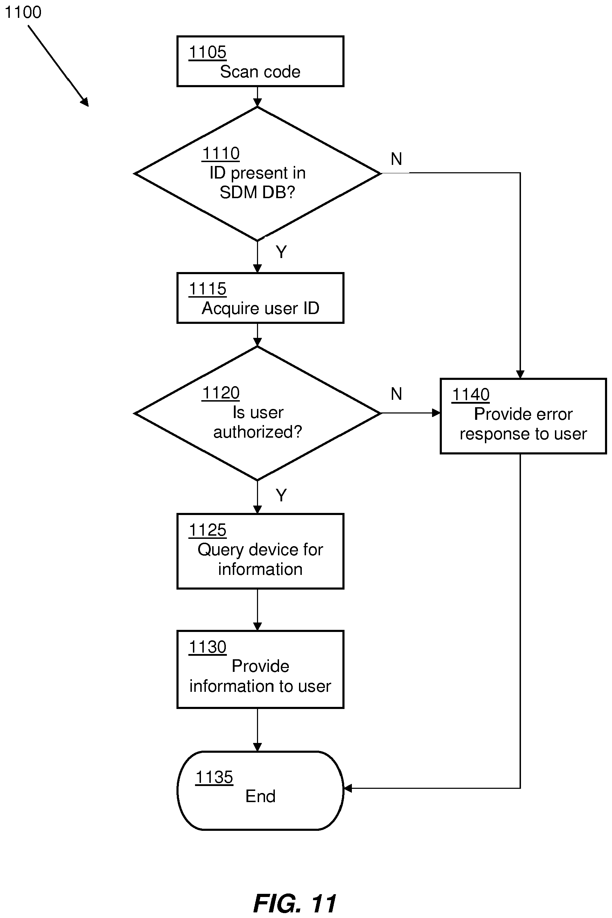

A flowchart of the above described method is illustrated in FIG. 11, indicated generally at 1100. In act 1105, a user scans a code representing a device with a camera of an SDM client device, for example, a smartphone. A query requesting information regarding the device represented by the scanned code is sent to the SDM engine, which checks the SDM database to determine if a device having a device ID represented by the scanned code is included in the database (act 1110). If the device ID is present in the database, the SDM engine acquires an ID of the user, for example, from user login information or from an IP address of the SDM client device or through any other methods known in the art (act 1115). In act 1120, the SDM engine queries the SDM database to check if the user is authorized to access the device having the device ID represented by the scanned code. If the user is authorized to access the device, the SDM engine, or a subsidiary system, queries the device for status information (act 1125) and the information is sent to the user, for example, in a display screen of the SDM client (act 1130). The information sent to the user may include, for example, status information regarding the device. Sending the information regarding the device to the user may also cause a virtual HMI to be presented on the SDM client through which the user may interact with the device. If either the device ID is not present in the SDM database or the user is not authorized to access the device, an error message is presented to the user, for example, in a display screen of the SDM client. The method ends at 1135. In some embodiments of the method 1100, a user may have access to all the device details for which the user is authenticated for, without the need for entering credentials.

Embodiments of methods utilizing a SDM to access device information or interact with a device may provide added security as opposed to methods not employing a SDM. In some embodiments, markers encoding device IDs, for example, QR codes do not contain any device information apart from a serial number or unique identifier of a device. A device marker is passive on its own. A portable electronic device, for example, a smartphone may have access to a SDM engine which interprets QR codes and can provide specific information regarding a device other than the information included in the QR code. Copying of a QR code is not sufficient to compromise the system. The SDM engine, which is present in the cloud or in the portable electronic device, is used to correlate the device ID in the QR code with a particular device and access information from the device associated with the QR code.

In some embodiments, a SDM database includes tables associating different users with different devices and the access level of the users with regard to particular devices. As an example, a table in the SDM database may be similar to Table 1 below and may include but not be limited to the following fields: User name, Device identification number, Authentication level and Device description.

**Table 1:**

| User Name | Device Identification # | Authentication Level | Device Description |
|---|---|---|---|
| User-1 | AS0940220026 | No Access | Smart-UPS 1500 |
| User-2 | AS0940220026 | Read-Only | Smart-UPS 1500 |
| User-3 | AS0940220026 | Read & Write | Smart-UPS 1500 |
| ...... | ...... | ...... | ..... |
| User-N | ES09XXXX0026 | Read-Only | ESXi Server |

The SDM database may also include tables in which various details of the various devices are present, for example, as shown in Table 2 below. The various device details may be updated periodically and/or upon a change in a detail of a device so that the details remain current.

**Table 2:**

| Device Identification # | Voltage (V) | Status | Temperature (F) | Etc ...... | Device Description |
|---|---|---|---|---|---|
| AS0940220026 | 230 | On-Battery | 73 | ....... | Smart-UPS 1500 |
| AS0940220027 | 230 | Online | 73 | ....... | Smart-UPS 1500 |
| AS0940220028 | 120 | Offline | 72 | ....... | Smart-UPS 1500 |
| ...... | ...... | ...... | ....... | ....... | |
| ES09XXXX0026 | 110 | Online | 65 | ....... | ESXi Server |

In some embodiments, a QR code includes the identification number of a device which is unique per device. Upon a visual scan of QR code of a device using a camera of an SDM client, the SDM client posts a web request along identification information regarding the user of the SDM client to fetch the device details. A SDM server running in the cloud receives the web request and parses the request to determine user authenticity from the Table-1 and provides information based on user authentication level.

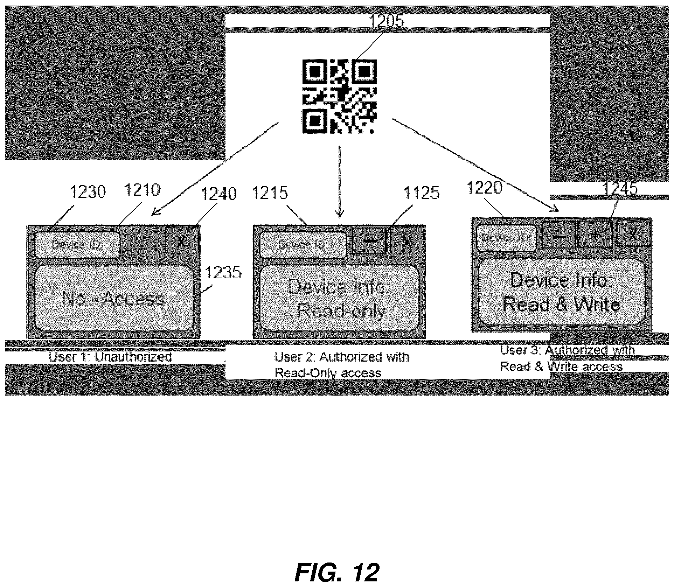

As an example, referring to FIG. 12, a Smart-UPS 1500 has identification #AS0940220026. A user scans the QR code 1205 of the device using a SDM client, for example on a smartphone. The SDM client posts a web request to the SDM server to obtain the user's authorization level. If user-1 scans the QR code, he/she will receive a No-Access widget 1210 on the display screen of the SDM client. If user-2 scans the QR code, he/she will receive a Read-Only widget 1215 on the display screen of the SDM client. If user-3 scans the QR code, he/she will receive a Read & Write widget 1220 on the screen of the SDM client.

In one embodiment, the user may minimize the widget using a minimize button 1125 from a status bar of the widget and can then scan a fiducial marker on a second device to obtain information for the second device. The user may dismiss or cancel the widget using a dismiss button 1140 from the status bar of the widget. The widgets 1210, 1215, 1220 provides Device ID 1230 to inform the user which device the user has attempted to access. Device information fetched from the web request is presented to the user in an information display area 1235 of the widgets 1215, 1220. If authorized, the user may expand the widget using a expand button 1145, which may invoke an expanded functionality widget such as that illustrated in FIG. 3, FIG. 4, or FIG. 5. The user may then read and write detailed information from or to the device through the expanded functionality widget.

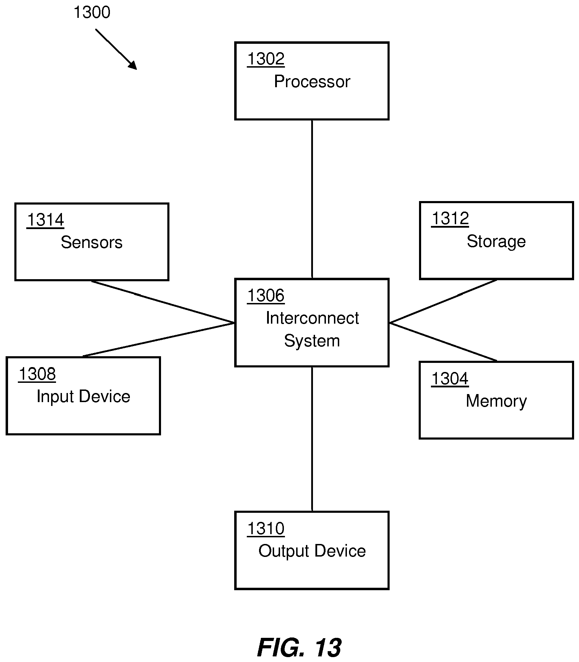

In some embodiments, a portable electronic device 405, SDM engine 1005, or cloud based device 1010 hosting a SDM engine may include a computerized control system. Various aspects may be implemented as specialized software executing in a general-purpose or specialized computer system 1300 such as that shown in FIG. 13. The computer system 1300 may include a processor 1302 connected to one or more memory devices 1304, such as a disk drive, solid state memory, or other device for storing data. Memory 1304 is typically used for storing programs and data during operation of the computer system 1300.

Components of the computer system 1300 may be coupled by an interconnection mechanism 1306, which may include one or more busses (e.g., between components that are integrated within a same machine) and/or a network (e.g., between components that reside on separate discrete machines). The interconnection mechanism 1306 enables communications (e.g., data, instructions) to be exchanged between system components of system 1300. Computer system 1300 includes one or more input devices 1308, for example, a keyboard, mouse, trackball, microphone, or display screen, which may include a touch sensitive screen, through which an operator may issue commands or programming to the system 1300. Computer system 1300 includes one or more output devices 1310, for example, a printing device, display screen, and/or a speaker. One or more sensors 1314 may also provide input to the computer system 1300. These sensors may include, for example, camera 450 of the portable electronic device 405 or one or more other sensors capable of providing information to the computer system 1300. In addition, the computer system 1300 may contain one or more interfaces that connect computer system 1300 to a communication network in addition to or as an alternative to the interconnection mechanism 1306.

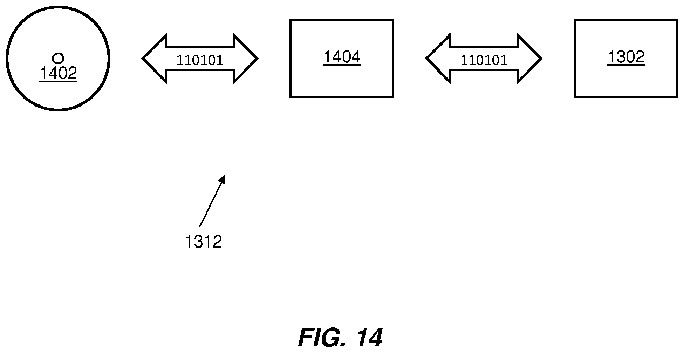

The storage system 1312, shown in greater detail in FIG. 14, typically includes a computer readable and writeable nonvolatile recording medium 1402 in which signals are stored that define a program to be executed by the processor or information to be processed by the program. The medium may include, for example, a disk or flash memory. Typically, in operation, the processor causes data to be read from the nonvolatile recording medium 1402 into another memory 1404 that allows for faster access to the information by the processor than does the medium 1402. This memory 1404 is typically a volatile, random access memory such as a dynamic random access memory (DRAM) or static memory (SRAM). It may be located in storage system 1312, as shown, or in memory system 1304. The processor 1302 generally manipulates the data within the integrated circuit memory 1304, 1404 and then copies the data to the medium 1402 after processing is completed. A variety of mechanisms are known for managing data movement between the medium 1402 and the integrated circuit memory element1304, 1404, and embodiments disclosed herein are not limited to any particular data movement mechanism. Embodiments disclosed herein are not limited to a particular memory system 1304 or storage system 1312.

The computer system may include specially-programmed, special-purpose hardware, for example, an application-specific integrated circuit (ASIC). Embodiments disclosed herein may be implemented in software, hardware or firmware, or any combination thereof. Further, such methods, acts, systems, system elements and components thereof may be implemented as part of the computer system described above or as an independent component.

Although computer system 1300 is shown by way of example as one type of computer system upon which various embodiments disclosed herein may be practiced, it should be appreciated that the embodiments disclosed herein are not limited to being implemented on the computer system as shown in FIG. 13. Various embodiments disclosed herein may be practiced on one or more computers having a different architecture or components that that shown in FIG. 13.

Computer system 1300 may be a general-purpose computer system that is programmable using a high-level computer programming language. Computer system 1300 may be also implemented using specially programmed, special purpose hardware. In computer system 1300, processor 1302 is typically a commercially available processor such as the well-known Pentium™ or Core™ class processors available from the Intel Corporation. Many other processors are available. Such a processor usually executes an operating system which may be, for example, the Windows 7 or Windows 8 operating system available from the Microsoft Corporation, the MAC OS System X available from Apple Computer, the Solaris Operating System available from Sun Microsystems, or UNIX available from various sources. Many other operating systems may be used.

The processor and operating system together define a computer platform for which application programs in high-level programming languages are written. It should be understood that embodiments disclosed herein are not limited to a particular computer system platform, processor, operating system, or network. Also, it should be apparent to those skilled in the art that the embodiments disclosed herein are not limited to a specific programming language or computer system. Further, it should be appreciated that other appropriate programming languages and other appropriate computer systems could also be used.

One or more portions of the computer system may be distributed across one or more computer systems (not shown) coupled to a communications network. These computer systems also may be general-purpose computer systems. For example, various embodiments disclosed herein may be distributed among one or more computer systems configured to provide a service (e.g., servers) to one or more client computers, or to perform an overall task as part of a distributed system. For example, various embodiments disclosed herein may be performed on a client-server system that includes components distributed among one or more server systems that perform various functions according to various embodiments. These components may be executable, intermediate (e.g., IL) or interpreted (e.g., Java) code which communicate over a communication network (e.g., the Internet) using a communication protocol (e.g., TCP/IP). In some embodiments one or more components of the computer system 600 may communicate with one or more other components over a wireless network, including, for example, a cellular telephone network.

It should be appreciated that embodiments disclosed herein are not limited to executing on any particular system or group of systems. Also, it should be appreciated that embodiments disclosed herein are not limited to any particular distributed architecture, network, or communication protocol. Various embodiments may be programmed using an object-oriented programming language, such as SmallTalk, Java, C++, Ada, or C# (C-Sharp). Other object-oriented programming languages may also be used. Alternatively, functional, scripting, and/or logical programming languages may be used. Various embodiments disclosed herein may be implemented in a non-programmed environment (e.g., documents created in HTML, XML or other format that, when viewed in a window of a browser program, render aspects of a graphical-user interface (GUI) or perform other functions). Various embodiments disclosed herein may be implemented as programmed or non-programmed elements, or any combination thereof.

The invention is defined by the appended claims.

## Claims

1. A portable computing device (405) comprising:
a body;
a camera (450) disposed on the body;
a display screen (455) disposed on the body; and
a processor (1302) within the body, the processor configured to:
identify an electronic device (415) included in a plurality of electronic devices (415) from an image of a map (1020) including markers associated with each of the plurality of electronic devices (415), wherein the image is captured by the camera (450), wherein the markers are positioned in locations on the map corresponding to physical locations of each of the plurality of electronic devices in a facility, each of the markers encoding identification information of a corresponding specific electronic device, each marker, when scanned by the camera (450) of portable computing device (405), causing a virtual HMI (400) of the corresponding specific electronic device to be displayed in the display screen (455) of the portable computing device, and wherein the map is displayed over a projector or a computer display or printed out on a sheet of paper;
configure and display a virtual human-machine interface (HMI) (400) associated with the electronic device (415) on the display screen (455) responsive to identifying the electronic device, wherein the virtual HMI has a substantially similar direct control interface to a physical HMI associated with the electronic device and configured with a level of functionality of the virtual HMI (400) selected based on an identification of a security access level of a user of the portable computing device (405);
receive user commands through the virtual HMI (400); and cause the user commands to be communicated to the electronic device (415).

2. The portable computing device of claim 1, wherein the virtual HMI (400) provides real-time status information for the electronic device (415).

3. The portable computing device of claim 1, wherein the virtual HMI (400) is customizable by a user of the portable computing device (405).

4. The portable computing device of claim 1, wherein the processor (1302) is further configured to superimpose a visual indication of the electronic device (415) on an image of the electronic device in the display screen (455).

5. The portable computing device of claim 4, wherein the visual indication of the electronic device (415) provides a real-time indication of a status of the electronic device.

6. The portable computing device of claim 1, wherein the virtual HMI (400) is displayed in a fixed location on the display screen (455), the virtual HMI remaining in the fixed location upon reorientation of the portable computing device (405).

7. The portable computing device of claim 1, wherein the processor (1302) is further configured to superimpose an animation of a portion of an operation to be performed on the electronic device (415) on an image of the electronic device in the display screen (455).

8. The portable computing device of claim 7, wherein the processor (1302) is further configured to modify the animation responsive to receipt of real-time status information from the electronic device (415).

9. The portable computing device of claim 1, wherein the processor (1302) is further configured to superimpose an image of an internal component of the electronic device (415) on an image of the electronic device in the display screen (455).

10. A system comprising:
a plurality of electronic devices (415);
a portable computing device (405) according to claim 1; and a projector or a sheet of paper or a device having a computer display;
the system configured to display a map (1020) including markers associated with each of the plurality of electronic devices (415), the markers positioned in locations on the map corresponding to physical locations of each of the plurality of electronic devices in a facility, each of the markers encoding identification information of a corresponding specific electronic device, each marker, when scanned by the camera (450) of portable computing device (405), causing a virtual HMI (400) of the corresponding specific electronic device to be displayed in the display screen (455) of the portable computing device, the map displayed over the projector or the computer display or printed out on the sheet of paper.

11. The system of claim 10, wherein the virtual HMI (400) of the corresponding specific electronic device (415) displays real-time status information of the specific electronic device.

12. A method for accessing an electronic device (415) included in a plurality of electronic devices (415), the method comprising:
displaying a map (1020) including markers associated with each of a plurality of electronic devices (415), the markers positioned in locations on the map corresponding to physical locations of each of the plurality of electronic devices in a facility, each of the markers encoding identification information of a corresponding specific electronic device, each marker, when scanned by the camera (450) of portable computing device (405), causing a virtual HMI (400) of the corresponding specific electronic device to be displayed in the display screen (455) of the portable computing device, the map displayed over a projector or a computer display or printed out on a sheet of paper;
scanning a marker (410) included in the map (1020) and associated with one of the plurality of electronic devices (415) with a camera (450) of a portable computing device (405);
determining unique identification information of the electronic device (415) from the marker (410);
acquiring identification information of a user of the portable electronic device (405);
determining a security access level of the user with regard to the electronic device (415) responsive to accessing a database associating a security access level of the user with the identification information of the user and the unique identification information of the electronic device (415);
configuring and displaying a virtual HMI (400) on a display screen (455) of the portable computing device (405), wherein the virtual HMI has a substantially similar direct control interface to a physical HMI associated with the electronic device (415) and configured with a level of functionality of the virtual HMI (400) selected based on an identification of a security access level of a user of the portable computing device; and
displaying real-time status information of the electronic device (415) on the display screen (455) of the portable computing device (405) responsive to a determination that the user has a security access level allowing for display of the real-time status information of the electronic device.

13. The method of claim 12, further comprising, responsive to a determination that the user has a sufficiently high security access level for the electronic device (415):
receiving user commands and configuration information through the virtual HMI (400); and
causing the user commands and configuration information to be communicated to the electronic device (415).

14. The method of claim 12, further comprising, responsive to a determination that the user is unauthorized to access the electronic device (415), displaying an indication that the user is unauthorized to access the electronic device in the virtual HMI (400).

## Patentansprüche

1. Eine tragbare Computervorrichtung (405), die Folgendes beinhaltet:
einen Körper;
eine Kamera (450), die am Körper angeordnet ist;
einen Anzeigebildschirm (455), der am Körper angeordnet ist; und
einen Prozessor (1302) innerhalb des Körpers, wobei der Prozessor für Folgendes konfiguriert ist:
Identifizieren einer elektronischen Vorrichtung (415), die in einer Vielzahl von elektronischen Vorrichtungen (415) umfasst ist, von einem Bild einer Karte (1020), die Marker umfasst, die mit jeder der Vielzahl von elektronischen Vorrichtungen (415) assoziiert sind, wobei das Bild von der Kamera (450) erfasst wird, wobei die Marker in der Karte an Orten positioniert sind, die physischen Orten von jeder der Vielzahl von elektronischen Vorrichtungen in einer Anlage entsprechen, wobei jeder der Marker Identifizierungsinformationen einer entsprechenden spezifischen elektronischen Vorrichtung codiert, wobei jeder Marker, wenn dieser von der Kamera (450) der tragbaren Computervorrichtung (405) gescannt wird, bewirkt, dass eine virtuelle HMI (400) der entsprechenden spezifischen elektronischen Vorrichtung auf dem Anzeigebildschirm (455) der tragbaren Computervorrichtung angezeigt wird, und wobei die Karte über einen Projektor oder eine Computeranzeige angezeigt oder auf einem Blatt Papier ausgedruckt wird;
Konfigurieren und Anzeigen einer virtuellen Mensch-Maschine-Schnittstelle (Human-Machine Interface, HMI) (400), die mit der elektronischen Vorrichtung (415) assoziiert ist, auf dem Anzeigebildschirm (455) reagierend auf das Identifizieren der elektronischen Vorrichtung, wobei die virtuelle HMI eine Direktsteuerungsschnittstelle aufweist, die im Wesentlichen einer physischen HMI ähnlich ist, die mit der elektronischen Vorrichtung assoziiert ist und mit einem Funktionalitätsgrad der virtuellen HMI (400) konfiguriert ist, der basierend auf einer Identifizierung eines Sicherheitzugriffsgrades eines Benutzers der tragbaren Computervorrichtung (405) ausgewählt wird;
Empfangen von Benutzerbefehlen durch die virtuelle HMI (400); und
Bewirken, dass die Benutzerbefehle an die elektronische Vorrichtung (415) übermittelt werden.

2. Tragbare Computervorrichtung gemäß Anspruch 1, wobei die virtuelle HMI (400) Echtzeit-Statusinformationen für die elektronische Vorrichtung (415) bereitstellt.

3. Tragbare Computervorrichtung gemäß Anspruch 1, wobei die virtuelle HMI (400) von einem Benutzer der tragbaren Computervorrichtung (405) angepasst werden kann.

4. Tragbare Computervorrichtung gemäß Anspruch 1, wobei der Prozessor (1302) ferner konfiguriert ist, eine visuelle Angabe der elektronischen Vorrichtung (415) über ein Bild der elektronischen Vorrichtung im Anzeigebildschirm (455) zu überlagern.

5. Tragbare Computervorrichtung gemäß Anspruch 4, wobei die visuelle Angabe der elektronischen Vorrichtung (415) eine Echtzeitangabe eines Status der elektronischen Vorrichtung bereitstellt.

6. Tragbare Computervorrichtung gemäß Anspruch 1, wobei die virtuelle HMI (400) an einem festen Ort auf der Bildschirmanzeige (455) angezeigt wird, wobei die virtuelle HMI bei Neuorientierung der tragbaren Computervorrichtung (405) an dem festen Ort bleibt.

7. Tragbare Computervorrichtung gemäß Anspruch 1, wobei der Prozessor (1302) ferner konfiguriert ist, eine Animation eines Teils eines Vorgangs, der an der elektronischen Vorrichtung (415) durchgeführt werden soll, über ein Bild der elektronischen Vorrichtung im Anzeigebildschirm (455) zu überlagern.

8. Tragbare Computervorrichtung gemäß Anspruch 7, wobei der Prozessor (1302) ferner konfiguriert ist, die Animation reagierend auf den Empfang von Echtzeit-Statusinformationen von der elektronischen Vorrichtung (415) zu modifizieren.

9. Tragbare Computervorrichtung gemäß Anspruch 1, wobei der Prozessor (1302) ferner konfiguriert ist, ein Bild einer internen Komponente der elektronischen Vorrichtung (415) über ein Bild der elektronischen Vorrichtung im Anzeigebildschirm (455) zu überlagern.

10. Ein System, das Folgendes beinhaltet:
eine Vielzahl von elektronischen Vorrichtungen (415);
eine tragbare Computervorrichtung (405) gemäß Anspruch 1; und
einen Projektor oder ein Blatt Papier oder eine Vorrichtung, die eine Computeranzeige aufweist;
wobei das System zum Anzeigen einer Karte (1020) konfiguriert ist, die Marker umfasst, die mit jeder der Vielzahl von elektronischen Vorrichtungen (415) assoziiert sind, wobei die Marker in der Karte an Orten positioniert sind, die physischen Orten von jeder der Vielzahl von elektronischen Vorrichtungen in einer Anlage entsprechen, wobei jeder der Marker Identifizierungsinformationen einer entsprechenden spezifischen elektronischen Vorrichtung codiert, wobei jeder Marker, wenn dieser von der Kamera (450) der tragbaren Computervorrichtung (405) gescannt wird, bewirkt, dass eine virtuelle HMI (400) der entsprechenden spezifischen elektronischen Vorrichtung auf dem Anzeigebildschirm (455) der tragbaren Computervorrichtung angezeigt wird, wobei die Karte über den Projektor oder die Computeranzeige angezeigt oder auf dem Blatt Papier ausgedruckt wird.

11. System gemäß Anspruch 10, wobei die virtuelle HMI (400) der entsprechenden spezifischen elektronischen Vorrichtung (415) Echtzeit-Statusinformationen der spezifischen elektronischen Vorrichtung anzeigt.

12. Ein Verfahren zum Zugreifen auf eine elektronische Vorrichtung (415), die in einer Vielzahl von elektronischen Vorrichtungen (415) umfasst ist, wobei das Verfahren Folgendes beinhaltet:
Anzeigen einer Karte (1020), die Marker umfasst, die mit jeder einer Vielzahl von elektronischen Vorrichtungen (415) assoziiert sind, wobei die Marker in der Karte an Orten positioniert sind, die physischen Orten von jeder der Vielzahl von elektronischen Vorrichtungen in einer Anlage entsprechen, wobei jeder der Marker Identifizierungsinformationen einer entsprechenden spezifischen elektronischen Vorrichtung codiert, wobei jeder Marker, wenn dieser von der Kamera (450) der tragbaren Computervorrichtung (405) gescannt wird, bewirkt, dass eine virtuelle HMI (400) der entsprechenden spezifischen elektronischen Vorrichtung auf dem Anzeigebildschirm (455) der tragbaren Computervorrichtung angezeigt wird, wobei die Karte über einen Projektor oder eine Computeranzeige angezeigt oder auf einem Blatt Papier ausgedruckt wird;
Scannen eines Markers (410), der in der Karte (1020) umfasst ist und mit einer der Vielzahl von elektronischen Vorrichtungen (415) assoziiert ist, mit einer Kamera (450) einer tragbaren Computervorrichtung (405);
Bestimmen von einmaligen Identifizierungsinformationen der elektronischen Vorrichtung (415) aus dem Marker (410);
Erlangen von Identifizierungsinformationen eines Benutzers der tragbaren elektronischen Vorrichtung (405);
Bestimmen eines Sicherheitszugriffsgrades des Benutzers in Bezug auf die elektronische Vorrichtung (415) reagierend auf das Zugreifen auf eine Datenbank, die einen Sicherheitszugriffsgrad des Benutzers mit den Identifizierungsinformationen des Benutzers und den einmaligen Identifizierungsinformationen der elektronischen Vorrichtung (415) assoziiert;
Konfigurieren und Anzeigen einer virtuellen HMI (400) auf einem Anzeigebildschirm (455) der tragbaren Computervorrichtung (405), wobei die virtuelle HMI eine Direktsteuerungsschnittstelle aufweist, die im Wesentlichen einer physischen HMI ähnlich ist, die mit der elektronischen Vorrichtung (415) assoziiert ist und mit einem Funktionalitätsgrad der virtuellen HMI (400) konfiguriert ist, der basierend auf einer Identifizierung eines Sicherheitzugriffsgrades eines Benutzers der tragbaren Computervorrichtung ausgewählt wird; und
Anzeigen von Echtzeit-Statusinformationen der elektronischen Vorrichtung (415) auf dem Anzeigebildschirm (455) der tragbaren Computervorrichtung (405) reagierend auf eine Bestimmung, dass der Benutzer einen Sicherheitszugriffsgrad aufweist, der die Anzeige der Echtzeit-Statusinformationen der elektronischen Vorrichtung gestattet.

13. Verfahren gemäß Anspruch 12, das ferner reagierend auf eine Bestimmung, dass der Benutzer einen ausreichend hohen Sicherheitszugriffsgrad für die elektronische Vorrichtung (415) aufweist, Folgendes beinhaltet:
Empfangen von Benutzerbefehlen und Konfigurationsinformationen durch die virtuelle HMI (400); und
Bewirken, dass die Benutzerbefehle und die Konfigurationsinformationen an die elektronische Vorrichtung (415) übermittelt werden.

14. Verfahren gemäß Anspruch 12, das ferner reagierend auf eine Bestimmung, dass der Benutzer nicht autorisiert ist, auf die elektronische Vorrichtung (415) zuzugreifen, das Anzeigen einer Angabe, dass der Benutzer nicht autorisiert ist, auf die elektronische Vorrichtung in der virtuellen HMI (400) zuzugreifen, beinhaltet.

## Revendications

1. Un dispositif informatique portable (405) comprenant :
un corps ;
une caméra (450) disposée sur le corps ;
un écran d'affichage (455) disposé sur le corps ; et
un processeur (1302) à l'intérieur du corps, le processeur étant configuré pour :
identifier un dispositif électronique (415) inclus dans une pluralité de dispositifs électroniques (415) à partir d'une image d'une carte (1020) incluant des repères associés à chaque dispositif électronique de la pluralité de dispositifs électroniques (415), l'image étant capturée par la caméra (450), les repères étant positionnés à des emplacements sur la carte correspondant à des emplacements physiques de chaque dispositif électronique de la pluralité de dispositifs électroniques dans une installation, chacun des repères codant des informations d'identification d'un dispositif électronique spécifique correspondant, chaque repère, lorsqu'il est balayé par la caméra (450) du dispositif informatique portable (405), provoquant l'affichage d'une IHM virtuelle (400) du dispositif électronique spécifique correspondant sur l'écran d'affichage (455) du dispositif informatique portable, et la carte étant affichée sur un projecteur ou un affichage d'ordinateur ou imprimée sur une feuille de papier ;
configurer et afficher une interface homme-machine (IHM) virtuelle (400) associée au dispositif électronique (415) sur l'écran d'affichage (455) en réponse à l'identification du dispositif électronique, l'IHM virtuelle ayant une interface de commande directe substantiellement similaire à celle d'une IHM physique associée au dispositif électronique et configurée avec un niveau de fonctionnalité de l'IHM virtuelle (400) sélectionné sur la base d'une identification d'un niveau d'accès de sécurité d'un utilisateur du dispositif informatique portable (405) ;
recevoir des commandes utilisateur par l'intermédiaire de l'IHM virtuelle (400) ; et
provoquer la communication des commandes utilisateur au dispositif électronique (415).

2. Le dispositif informatique portable de la revendication 1, dans lequel l'IHM virtuelle (400) fournit des informations d'état en temps réel pour le dispositif électronique (415).

3. Le dispositif informatique portable de la revendication 1, dans lequel l'IHM virtuelle (400) est personnalisable par un utilisateur du dispositif informatique portable (405).

4. Le dispositif informatique portable de la revendication 1, dans lequel le processeur (1302) est en outre configuré pour superposer une indication visuelle du dispositif électronique (415) à une image du dispositif électronique sur l'écran d'affichage (455).

5. Le dispositif informatique portable de la revendication 4, dans lequel l'indication visuelle du dispositif électronique (415) fournit une indication en temps réel d'un état du dispositif électronique.

6. Le dispositif informatique portable de la revendication 1, dans lequel l'IHM virtuelle (400) est affichée à un emplacement fixe sur l'écran d'affichage (455), l'IHM virtuelle restant à l'emplacement fixe lors d'une réorientation du dispositif informatique portable (405).

7. Le dispositif informatique portable de la revendication 1, dans lequel le processeur (1302) est en outre configuré pour superposer une animation d'une partie d'une opération devant être effectuée sur le dispositif électronique (415) à une image du dispositif électronique sur l'écran d'affichage (455).

8. Le dispositif informatique portable de la revendication 7, dans lequel le processeur (1302) est en outre configuré pour modifier l'animation en réponse à la réception d'informations d'état en temps réel en provenance du dispositif électronique (415).

9. Le dispositif informatique portable de la revendication 1, dans lequel le processeur (1302) est en outre configuré pour superposer une image d'un composant interne du dispositif électronique (415) à une image du dispositif électronique sur l'écran d'affichage (455).

10. Un système comprenant :
une pluralité de dispositifs électroniques (415) ;
un dispositif informatique portable (405) selon la revendication 1 ; et
un projecteur ou une feuille de papier ou un dispositif ayant un affichage d'ordinateur ;
le système étant configuré pour afficher une carte (1020) incluant des repères associés à chaque dispositif électronique de la pluralité de dispositifs électroniques (415), les repères étant positionnés à des emplacements sur la carte correspondant à des emplacements physiques de chaque dispositif électronique de la pluralité de dispositifs électroniques dans une installation, chacun des repères codant des informations d'identification d'un dispositif électronique spécifique correspondant, chaque repère, lorsqu'il est balayé par la caméra (450) du dispositif informatique portable (405), provoquant l'affichage d'une IHM virtuelle (400) du dispositif électronique spécifique correspondant sur l'écran d'affichage (455) du dispositif informatique portable, la carte étant affichée sur le projecteur ou l'affichage d'ordinateur ou imprimée sur la feuille de papier.

11. Le système de la revendication 10, dans lequel l'IHM virtuelle (400) du dispositif électronique spécifique correspondant (415) affiche des informations d'état en temps réel du dispositif électronique spécifique.

12. Une méthode d'accès à un dispositif électronique (415) inclus dans une pluralité de dispositifs électroniques (415), la méthode comprenant :
l'affichage d'une carte (1020) incluant des repères associés à chaque dispositif électronique d'une pluralité de dispositifs électroniques (415), les repères étant positionnés à des emplacements sur la carte correspondant à des emplacements physiques de chaque dispositif électronique de la pluralité de dispositifs électroniques dans une installation, chacun des repères codant des informations d'identification d'un dispositif électronique spécifique correspondant, chaque repère, lorsqu'il est balayé par la caméra (450) d'un dispositif informatique portable (405), provoquant l'affichage d'une IHM virtuelle (400) du dispositif électronique spécifique correspondant sur l'écran d'affichage (455) du dispositif informatique portable, la carte étant affichée sur un projecteur ou un affichage d'ordinateur ou imprimée sur une feuille de papier ;
le balayage d'un repère (410) inclus dans la carte (1020) et associé à un dispositif électronique de la pluralité de dispositifs électroniques (415) avec une caméra (450) d'un dispositif informatique portable (405) ;
la détermination d'informations d'identification uniques du dispositif électronique (415) à partir du repère (410) ;
l'acquisition d'informations d'identification d'un utilisateur du dispositif électronique portable (405) ;
la détermination d'un niveau d'accès de sécurité de l'utilisateur pour ce qui concerne le dispositif électronique (415) en réponse à l'accès à une base de données associant un niveau d'accès de sécurité de l'utilisateur aux informations d'identification de l'utilisateur et aux informations d'identification uniques du dispositif électronique (415) ;
la configuration et l'affichage d'une IHM virtuelle (400) sur un écran d'affichage (455) du dispositif informatique portable (405), l'IHM virtuelle ayant une interface de commande directe substantiellement similaire à celle d'une IHM physique associée au dispositif électronique (415) et configurée avec un niveau de fonctionnalité de l'IHM virtuelle (400) sélectionné sur la base d'une identification d'un niveau d'accès de sécurité d'un utilisateur du dispositif informatique portable ; et
l'affichage d'informations d'état en temps réel du dispositif électronique (415) sur l'écran d'affichage (455) du dispositif informatique portable (405) en réponse à une détermination que l'utilisateur a un niveau d'accès de sécurité permettant l'affichage des informations d'état en temps réel du dispositif électronique.

13. La méthode de la revendication 12, comprenant en outre, en réponse à une détermination que l'utilisateur a un niveau d'accès de sécurité suffisamment élevé pour le dispositif électronique (415) :
la réception de commandes utilisateur et d'informations de configuration par l'intermédiaire de l'IHM virtuelle (400) ; et
la provocation de la communication des commandes utilisateur et des informations de configuration au dispositif électronique (415).

14. La méthode de la revendication 12, comprenant en outre, en réponse à une détermination que l'utilisateur n'est pas autorisé à accéder au dispositif électronique (415), l'affichage d'une indication que l'utilisateur n'est pas autorisé à accéder au dispositif électronique dans l'IHM virtuelle (400).
